# EUROPÄISCHE PATENTSCHRIFT

(11) **EP 2 130 857 B1**
(45) Veröffentlichungstag und Bekanntmachung des Hinweises auf die Patenterteilung: **14.03.2012**
(21) Anmeldenummer: 09158818.6
(22) Anmeldetag: 27.04.2009
(51) Int. Cl.: C08J 7/04, C08J 7/06, B60S 1/38

(54) **Beschichtungsmaterial für Elastomermaterialien**
Coating material for elastomer materials
Matériau de revêtement pour matériaux élastomères

(30) Priorität: 06.06.2008 DE 102008002250
(43) Veröffentlichungstag der Anmeldung: 09.12.2009
(73) Patentinhaber: Robert Bosch GmbH, 70442 Stuttgart (DE)
(72) Erfinder: Verburgh, Yves, 2870, Puurs (BE)

(56) Entgegenhaltungen:
- EP-A- 0 812 875
- EP-A- 1 327 670
- EP-A- 1 783 185
- EP-A- 1 801 176
- WO-A-2004/011536
- FR-A- 2 811 325
- FR-A- 2 832 209
- US-A1- 2008 041 272
- US-B1- 6 274 671
- DATABASE WPI Week 200435 Thomson Scientific, London, GB; AN 2004-366865 XP002541473 & JP 2003 238894 A (JSR CORP) 27. August 2003 (2003-08-27)
- DATABASE WPI Week 200765 Thomson Scientific, London, GB; AN 2007-693438 XP002541474 & JP 2007 169563 A (DAICEL CHEM IND LTD) 5. Juli 2007 (2007-07-05)

## Beschreibung

### Stand der Technik

Die vorliegende Erfindung bezieht sich auf ein Wischgummi für Wischblätter von Scheibenwischern gemäß den Ansprüche 1-15.

Wischblätter für Scheibenwischer sind üblicherweise mit Elastomerprofilen versehen, um sich einerseits an die Kontur einer Windschutzscheibe eines Kraftfahrzeugs anpassen zu können und andererseits eine ausreichende Elastizität bei unterschiedlichen Temperaturanforderungen zu gewährleisten. Derartige Elastomerprofile sind beispielsweise aus Naturkautschuk, Chloropren, Silikonkautschuk oder Polyurethangummi hergestellt. Allerdings zeigen diese Elastomermaterialien einen vergleichsweise hohen Reibungskoeffizienten auf einer zu reinigenden Oberfläche, so dass oftmals ein Vielfaches der Anpresskraft zur Horizontalbewegung des Wischblattes angelegt werden muss.

Durch einen dünnen Wasserfilm zwischen dem Wischblatt des Scheibenwischers und der zu reinigenden Oberfläche wird die Funktionalität des Wischgummis gewährleistet. In diesem Fall wird eine ausreichend gute Wischqualität bei gleichzeitig geringem Geräuschniveau erreicht. Dies beruht darauf, dass der dünne Wasserfilm als Schmierstoff zwischen dem beschichteten Wischgummi und der zu reinigenden Oberfläche dient und somit faktisch den Reibungskoeffizienten des Elastomerprofils auf der zu reinigenden Oberfläche herabsetzt. Ist ein derartiger Wasserfilm nicht gewährleistet oder wird eine trockene Glasoberfläche gereinigt, so kommt es zu unerwünschten Geräuschphänomenen.

Dies tritt auch dann auf, wenn die zu reinigende Oberfläche mit einer wasserabweisenden Substanz behandelt wird und somit einen hydrophoben Charakter annimmt. Selbst wenn eine derartige zu reinigende Oberfläche mit Wasser benetzt wird, bildet sich beim Wischvorgang kein ausreichender Wasserfilm aus. Zur Lösung dieses Problems ist beispielsweise aus FR-A 283 22 09 bekannt, einen Wischgummi für Scheibenwischer mit einer Beschichtung zu versehen, die mehr mineralische Füllstoffe enthält. Auf Grund des Füllstoffgehalts bildet die Beschichtung auf ihrer Oberfläche mikroskopische Poren aus, die hydrophile Eigenschaften haben und somit eine gewisse Menge an Wasser absorbieren. Träger dieser hydrophilen Eigenschaften der Beschichtung sind ausschließlich die mineralischen Füllstoffe.

Alternativ werden die Elastomerprofile von Wischblättern mit einer reibungsvermindernden Schicht versehen. Derartige Beschichtungen umfassen beispielsweise Schichten aus einem Trockenschmierstoff wie Graphit oder Molybdändisulfid, wobei dieser Trockenschmierstoff mittels eines geeigneten Binders wie beispielsweise Polyestern oder Polyurethanen auf der Oberfläche des Elastomerprofils fixiert wird. In diese Bindermatrix werden dann Partikel von Molybdändisulfid, Polyamid, Polyethylen und anderen dispergiert. Die Beschichtungen nehmen üblicherweise einen wasserabweisenden Charakter an, da sie auf Grund der verwendeten Trockenschmierstoffpartikel bzw. des verwendeten Binders hydrophob sind.

Derartige Beschichtungen für Wischblätter sind z.B. aus US-B 6,696,391 bekannt.

### Offenbarung der Erfindung

### Vorteile der Erfindung

Ein erfindungsgemäßes Beschichtungsmittel für Wischgummis von Scheibenwischern, enthält mindestens ein Lösungsmittel und mindestens ein Bindemittel mit mindestens einer Harzkomponente. Mindestens eine Harzkomponente ist dabei ein Alkoxysilan.

Mit dem erfindungsgemäßen Beschichtungsmittel lässt sich eine dauerhafte Beschichtung auf einem Elastomermaterial, die nur einen geringen Verschleiß aufweist, realisieren. Zudem kann mit einem mit dem erfindungsgemäßen Beschichtungsmaterial beschichteten Wischblatt eine Scheibe schlierenfrei gereinigt werden.

Um eine Beschichtung zu bilden, wird das Beschichtungsmittel durch Hydrolyse des Alkoxysilans oder des Organosilans ausgehärtet. Die Hydrolyse wird dabei üblicherweise in Gegenwart von Wasser durchgeführt. Es entstehen reaktive Silanol-Gruppen, die weiter zu einer Binder-Phase kondensieren.

Da die Hydrolyse des Alkoxysilans oder des Organosilans und die sich daran anschließende Kondensation zu einem dreidimensionalen Netz bei Raumtemperatur erfolgen, wird auch der Nachteil einer Aushärtung bei hohen Temperaturen vermieden. Hierdurch wird die thermische Belastung auf das Elastomermaterial nach der Vulkanisation reduziert.

Um eine stabile Beschichtung zu bilden, weist das Alkoxysilan vorzugsweise mindestens zwei funktionelle Gruppen auf. Neben mindestens zwei Alkoxy-Gruppen ist es bevorzugt, wenn das Alkoxysilan neben mindestens einer Alkoxygruppe mindestens eine weitere organische funktionelle Gruppe aufweist. Ein solches Alkoxysilan enthält z.B. mindestens eine hydrolisierbare anorganische Alkyoxysilylgruppe und mindestens eine organische funktionelle Gruppe oder mindestens eine hydrolisierbare Alkoxysilylgruppe und mindestens eine halogensubstituierte Alkylgruppe.

Geeignete organische funktionelle Gruppen, die das Alkoxysilan neben der Alkoxygruppe aufweist, sind z.B. Hydroxyl-, Hydroxyalkyl-, Carboxyl-, Carboxyalkyl-, Epoxy-, Amino- und/oder Aminoalkylgruppen. Die halogensubstituierte Alkylgruppe ist vorzugsweise ein Fluoroalkyl.

So eignen sich z.B. als Harzkomponente Alkoxysilane, die ausgewählt sind aus der Gruppe bestehend aus Tetramethoxysilan, Tetraethosysilan, β-(3,4-Epoxycyclohexyl)-ethyltriethoxysilan, 3-Glycidyloxypropyltriethoxysilan und Methyltrimethoxysilan. Ganz besonders bevorzugt ist jedoch 3,3,4,4,6,6,7,7,8,8,8-Tridekafluorooktyltriethoxysilan als Alkoxysilan, das als Harzkomponente im Beschichtungsmittel enthalten ist.

Besonders bevorzugt ist im Beschichtungsmittel zusätzlich mindestens ein festes Gleitmittel enthalten. Durch das feste Gleitmittel, das im Beschichtungsmittel enthalten ist, wird der Reibungskoeffizient der Beschichtung herabgesetzt. Hierdurch wird vermieden, dass ein mit dem Beschichtungsmittel beschichtetes Wischblatt auf einer Scheibe beim Betrieb rattert. Auch andere Geräusche, die ein Wischblatt im Betrieb auf einer Scheibe erzeugt, werden hierdurch unterdrückt. Durch das feste Gleitmittel eignet sich die Beschichtung sowohl für hydrophobe als auch für hydrophile Windschutzscheiben von Kraftfahrzeugen.

Der Anteil an festem Gleitmittel liegt vorzugsweise im Bereich von 5 bis 95 Gew.-%, insbesondere im Bereich von 50 bis 90 Gew.-%, jeweils bezogen auf die Masse der ausgehärteten Beschichtung.

Geeignete feste Gleitmittel sind ausgewählt aus der Gruppe bestehend aus Molybdändisulfid, Graphit, Polytetrafluorethylen, Polyamid, Polyethylen, Mikroperlen aus Glas, kolloidalem Kieselgel, Quarzmehl, Silikat und Titandioxid. Besonders bevorzugt als festes Gleitmittel sind Graphit und Molybdändisulfid.

Durch das Alkoxysilan oder Organosilan als Harzkomponente werden die einzelnen Partikel des festen Gleitmittels in der beim Aushärten entstehenden Polymermatrix eingebunden, wodurch eine sehr gute Kohäsionskraft, ein guter Abriebswiderstand und sehr gute Haftung am Elastomermaterial erhalten wird. Dies wird sogar bei hohem Anteil an festem Gleitmittel im Beschichtungsmittel erzielt.

In einer Ausführungsform der Erfindung enthält das Beschichtungsmittel neben dem Alkoxysilan oder dem Organosilan weiterhin mindestens ein funktionelle Gruppen aufweisendes organisches Bindemittel. Die funktionellen Gruppen des Bindemittels reagieren beim Aushärten des Beschichtungsmittels entweder mit den Silanolgruppen des hydrolysierten Alkoxysilans oder alternativ mit dem funktionellen organischen Rest, d.h. der mindestens einen weiteren organischen funktionellen Gruppe des Alkoxysilans.

Der Anteil an funktionellen Gruppen aufweisendem organischen Bindemittel in der Harzkomponente liegt vorzugsweise im Bereich von 0,5 bis 20 Gew.-%, insbesondere im Bereich von 2 bis 10 Gew.-%.

Geeignete funktionelle Gruppen aufweisende Bindemittel sind z.B. ausgewählt aus der Gruppe bestehend aus (Meth)acrylharz, Polyesterharz, Polyester-Polyurethanharz, Polyurethanharz, Polyamidharz, Polyamidimidharz, die jeweils Hydroxyl-, Amino-, Aminoalkyl-, Epoxy-, Carboxyl- und/oder Carboxyalkyl-Gruppen enthalten.

In einer Ausführungsform enthält das Beschichtungsmittel zum Beispiel eine wässrige Copolymerdispersion, basierend auf Acrylsäure- und Methacrylsäureestern sowie Styrol. Vorteil der wässrigen Copolymerdispersion basierend auf Acrylsäure- und Methacrylsäureestern sowie Styrol ist, dass enthaltene funktionelle Carboxylgruppen mit Epoxy-Gruppen, beispielsweise von 3-(3,4-Epoxycyclohexyl)-ethyltriethoxysilan, vernetzen.

Wenn das Beschichtungsmittel einen hydrophoben Charakter aufweisen soll, so ist es bevorzugt, wenn weiterhin mindestens ein Additiv zur Verbesserung der hydrophoben Eigenschaften enthalten ist. Geeignete Additive, die zur Verbesserung der hydrophoben Eigenschaften zugegeben werden können, sind z.B. ausgewählt aus der Gruppe bestehend aus Polyethylendispersionen oder Wachsdispersionen. Geeignete Wachse, die in Form der Wachsdispersion dem Beschichtungsmittel zugegeben werden können, sind z.B. Paraffinwachs, Carnaubawachs, mikrokristallines Wachs und Fischer-Tropsch-Wachs.

Neben den Additiven zur Verbesserung der hydrophoben Eigenschaften können im Beschichtungsmittel auch beliebige weitere Additive, die dem Fachmann bekannt sind, enthalten sein. Solche dem Beschichtungsmittel zusätzlich zugegebenen Additive sind z.B. Weichmacher, Pigmente, Farbstoffe oder UV-Stabilisatoren. Weiterhin kann das Beschichtungsmittel auch feste Füllstoffe enthalten, z.B. Kolloid-Kieselerde, um die Festigkeit der Beschichtung zu erhöhen. Zur Erhöhung der Festigkeit der Beschichtung eignen sich neben Kolloid-Kieselerde z.B. auch Silica, Silicate, Kieselerde, Quarz, Talkum, Kaolin, Titandioxid, Aluminiumoxid, Kreide und Kombinationen daraus.

Der Anteil an Additiven liegt vorzugsweise im Bereich von 0 bis 40 Gew.-%, insbesondere im Bereich von 10 bis 30 Gew.-%, bezogen auf die ausgehärtete Beschichtung.

Das Lösemittel, das das Beschichtungsmittel enthält, ist vorzugsweise Wasser. Zusätzlich kann auch organisches Lösungsmittel, beispielsweise Butylglykol, 2-Butoxyethanol, 2-Methoxypropanol, 2-(2-Butoxyethoxy)ethanol, Propan-1,2-diol oder 3-Butoxy-2-propanol erhalten sein. Ein derartiges auf Wasserbasis ausgeführtes Beschichtungsmittel hat den Vorteil, dass keine oftmals gesundheitsschädlichen Lösungsmittel eingesetzt werden müssen. Insbesondere beim Trocknen und Aushärten einer Beschichtung, die mit dem erfmdungsgemäßen Beschichtungsmittel hergestellt wurde, wird so vermieden, dass gesundheitsschädliche Lösungsmittel verdampfen und mit der Abluft der Beschichtung entsorgt werden müssen. Dies macht hohe Anforderungen an eine Abluftreinigung erforderlich.

Der Anteil an Lösungsmittel liegt vorzugsweise im Bereich von 60 bis 90 Gew.-%, bevorzugt im Bereich von 70 bis 85 Gew.-% bezogen auf die Masse des nicht ausgehärteten Beschichtungsmittels. Wenn Wasser und organisches Lösungsmittel enthalten sind, so liegt der Anteil an organischem Lösungsmittel bezogen auf den Gesamtlösungsmittelgehalt vorzugsweise im Bereich von 10 bis 30 Gew.-%, insbesondere im Bereich von 15 bis 25 Gew.-%.

Das erfindungsgemäße Beschichtungsmittel wird zur Beschichtung von Wischgummis für Wischblätter von Scheibenwischern eingesetzt. Derartige Wischgummis umfassen einen aus einem Elastomermaterial gebildeten Profilkörper, der zumindest teilweise mit einer Oberflächenbeschichtung versehen ist. Diese Oberflächenbeschichtung wird dabei aus dem erfindungsgemäßen Beschichtungsmittel gebildet.

Durch die Beschichtung des Wischgummis wird eine stabile, verschleißfeste Oberfläche erzielt, die zudem nur einen geringen Reibungswiderstand auf Glas aufweist. Hierzu ist die Oberflächenbeschichtung vorzugsweise in den Bereichen des Wischgummis vorgesehen, die mit einer zu reinigenden Oberfläche in Kontakt kommen.

Das Elastomermaterial, aus dem der Profilkörper für das Wischgummi gebildet wird, ist vorzugsweise ausgewählt aus der Gruppe bestehend aus Naturkautschuk (NR), Chloropren-Kautschuk (CR), Butadien-Kautschuk (BR), Styrol-Butadien-Kautschuk (SBR), Ethylen-Propylen-Copolymere (EPM), Ethylen-Propylen-Dien-Terpolymere (EPDM), Ethylen-Vinylacetat-Copolymere (EVM), chloriertes Polyethylen (CM), chlorsulfoniertes Polyethylen (CSM), Acrylnitril-Butadien-Kautschuk (NBR), hydrierter Acrylnitril-Butadien-Kautschuk (HNBR), Fluorkautschuk (FPM), Polyurethan-Elastomere (PUR), Mischungen aus Acrylnitril-Butadien-Kautschuk und Polyvinylchlorid (NBR/PVC), sowie Mischungen aus diesen Materialien.

Besonders bevorzugt ist das Elastomermaterial ausgewählt aus Ethylen-Propylen-Dien-Terpolymer, Naturkautschuk, Chloropren-Kautschuk oder einer Mischung daraus.

### Beispiele

### Vergleichsbeispiel 1

Auf ein handelsübliches Elastomerprofil für Wischgummis für Windschutzscheiben von Kraftfahrzeugen wird mit einem Sprühbeschichtungsverfahren eine Beschichtungszusammensetzung aufgetragen, um einen niedrigen Reibwert zu erhalten. Die Beschichtungszusammensetzung enthält 60 Gew.-% einer 27%-igen Graphitdispersion in Wasser, 3,3 Gew.-% einer 50%-igen Acryl-Methacryl-Styrol-Terpolymerdisperision, 0,1 Gew.-% eines nicht-ionischen Benetzungsmittels, 31,5 Gew.-% entionisiertes Wasser und 5,1 Gew.-% Butylglykol.

Nach Trocknung in einem Heißluftkonvektionsofen mit Bandförderer bei einer Lufttemperatur von 65°C, um das wässrige Lösungsmittel zu verdampfen, wird eine trockene Beschichtung an der Lippe des Wischgummiprofils erhalten.

Die so erzeugten Wischgummiprofile laufen glatt auf einer nassen hydrophilen Windschutzscheibe, jedoch beginnt das Wischgummiprofil nach ungefähr 750 Wischzyklen ein brummendes Geräusch abzugeben.

Wenn das Wischgummiprofil auf einer hydrophoben Windschutzscheibe läuft, wird nach 15 Minuten Verschleiß an der Kante der Wischlippe beobachtet, woraus ein zunehmendes Rattern entsteht.

### Beispiel 1

Ein handelsübliches Elastomerprofil für Wischgummis für Windschutzscheiben wird durch eine Sprühbeschichtung mit einer Beschichtungszusammensetzung beschichtet, um eine Beschichtung mit niedrigem Reibungskoeffizienten zu erhalten. Die Beschichtungszusammensetzung enthält 57,9 Gew.-% einer 27%-igen Graphitdispersion in Wasser, 3,3 Gew.-% einer 50%-igen Acryl-Methacryl-Styrol-Terpolymerdispersion, 0,1 Gew.-% B-(3,4-Epoxycyclohexyl)Ethyltriethoxysilan (CoatOSil 1770 von Momentive), 0,2 Gew.-% eines nicht-ionischen Benetzungsmittels, 33,1 Gew.-% entionisiertes Wasser und 5,4 Gew.-% Butylglykol.

Die Beschichtung wurde nach dem Aufbringen in einem Heißluftkonvektionsofen mit Bandförderer bei einer Lufttemperatur von 65°C getrocknet, um das wässrige Lösungsmittel zu verdampfen. Es wurde eine trockene Beschichtung auf der Abstreiflippe des Wischgummiprofils erhalten.

Das Wischgummiprofil lief glatt auf einer nassen hydrophilen Windschutzscheibe. Es wurde kein brummendes Geräusch für mindestens 3000 Wischzyklen beobachtet. Auf einer hydrophoben Windschutzscheibe wurde 30 Minuten lang kein Verschleiß der Beschichtung an der Kante der Wischerlippe beobachtet.

### Beispiel 2

Ein handelsübliches Elastomerprofil für Wischgummis für Windschutzscheiben wurde mit einem Beschichtungsmittel durch eine Sprühbeschichtung beschichtet. Das Beschichtungsmittel enthielt 60,0 Gew.-% 27%-ige Graphitdispersion in Wasser, 10,0 Gew.-% 3-Glycidyloxypropyltriethoxysilan (Dynosylan Glyeo der Evonik), 0,1 Gew.-% nicht-ionisches Benetzungsmittel, 25,6 Gew.-% entionisiertes Wasser, 4,2 Gew.-% Butylglykol und 0,1 Gew.-% 37%-ige Salzsäure.

Nach Ansetzen hat die Zusammensetzung für das Beschichtungsmittel 24 h geruht, bevor diese auf das Elastomerprofil aufgesprüht wurde.

Nach Trocknung in einem Heißluftkonvektionsofen mit Bandförderer bei einer Lufttemperatur von 65°C, um das wässrige Lösungsmittel zu verdampfen, wurde auf der Wischlippe des Wischgummiprofils eine trockene Beschichtung erhalten.

Das Wischgummiprofil lief glatt auf einer nassen hydrophilen Windschutzscheibe. Es wurde mindestens 3000 Wischzyklen lang kein brummendes Geräusch beobachtet.

Beim Betrieb auf einer hydrophoben Windschutzscheibe wurde 30 Minuten lang kein Verschleiß der Beschichtung an der Kante der Wischlippe beobachtet.

### Beispiel 3

Auf ein handelsübliches Elastomerprofil für Wischgummis für Windschutzscheiben wurde durch Sprühbeschichtung ein Beschichtungsmittel aufgetragen, um eine Beschichtung mit niedrigem Reibbeiwert zu erhalten. Das Beschichtungsmittel enthält 60,0 Gew.-% 27%-ige Graphitdispersion in Wasser, 7,5 Gew.-% einer 25%-igen Kolloid-Kieselerde-Dispersion, 7,7 Gew.-% einer 22%-igen Lösung hydrolysierten Tetramethoxysilans in Wasser, 2,2 Gew.-% einer 10%-igen Lösung eines Benetzungsmittels, 22,6 Gew.-% entionisiertes Wasser.

Nach dem Auftragen wurde das Beschichtungsmittel in einem Heißluftkonvektionsofen mit Bandförderer bei einer Lufttemperatur von 65°C getrocknet, um das wässrige Lösungsmittel zu verdampfen. Es wurde eine trockene Beschichtung erhalten.

Das so beschichtete Wischgummiprofil lief glatt auf einer nassen hydrophilen Windschutzscheibe. Auch nach mindestens 3000 Wischzyklen wurde kein brummendes Geräusch beobachtet.

Auf einer hydrophoben Windschutzscheibe wurde 30 Minuten lang kein Verschleiß an der Kante der Wischlippe beobachtet.

### Beispiel 4

Ein Beschichtungsmittel, enthaltend 60 Gew.-% einer 27%-igen Graphitdispersion in Wasser, 10 Gew.-% 3-Glycidyloxypropyltriethoxysilan (Dynosylan Glyeo der Evonik), 1,5 Gew.-% eines bifunktionalen Silans, enthaltend hydrolysierbare anorganische Ethoxysilylgruppen und Fluoroalkylketten (Dynosylan F8261 der Evonik), 0,1 Gew.-% eines nicht-ionischen Benetzungsmittels, 24,3 Gew.-% entionisiertes Wasser, 4 Gew.-% Butylglykol und 0,1 Gew.-% 37%-iger Salzsäure, wurde durch ein Sprühbeschichtungsverfahren auf ein handelsübliches Elastomerprofil für Wischgummis für Windschutzscheiben aufgebracht. Die Beschichtungsmittelzusammensetzung hat nach dem Ansetzen zunächst 24 h vor dem Aufbringen auf das Elastomerprofil geruht.

Um eine trockene Beschichtung zu erhalten wurde das Profil nach dem Auftragen des Beschichtungsmittels in einem Heißluftkonvektionsofen mit einem Bandförderer bei einer Lufttemperatur von 65°C getrocknet, um das wässrige Lösungsmittel zu verdampfen.

Das Wischgummi mit der so erhaltenen Beschichtung lief glatt auf einer nassen hydrophilen Windschutzscheibe. Auch nach mindestens 3000 Wischzyklen wurde kein brummendes Geräusch beobachtet.

Beim Betrieb des so beschichteten Wischgummis auf einer hydrophoben Windschutzscheibe wurde 30 Minuten lang kein Verschleiß der Beschichtung an der Kante der Wischlippe beobachtet.

## Patentansprüche

1. Wischgummi für Wischblätter von Scheibenwischern, das einen aus einem Elastomermaterial gebildeten Profilkörper umfasst, der zumindest teilweise mit einer Oberflächenbeschichtung versehen ist, **dadurch gekennzeichnet, dass** die Oberflächenbeschichtung aus einem Beschichtungsmittel gebildet ist, enthaltend mindestens ein Lösungsmittel und mindestens ein Bindemittel mit mindestens einer Harzkomponente, wobei die mindestens eine Harzkomponente ein Alkoxysilan oder ein Organosilan ist.

2. Wischgummi gemäß Anspruch 1, **dadurch gekennzeichnet, dass** das Alkoxysilan mindestens zwei funktionelle Gruppen aufweist.

3. Wischgummi gemäß Anspruch 2, **dadurch gekennzeichnet, dass** das Alkoxysilan neben mindestens einer Alkoxygruppe mindestens eine weitere organische funktionelle Gruppe aufweist.

4. Wischgummi gemäß einem der Ansprüche 1 bis 3, **dadurch gekennzeichnet, dass** das Alkoxysilan ein mindestens eine hydrolisierbbare anorganische Alkoxysilylgruppe und mindestens eine organische funktionelle Gruppe aufweisendes Alkoxysilan oder ein mindestens eine hydrolysierbare Alkoxysilylgruppe und mindestens ein Fluoralkyl aufweisendes Alkoxysilan ist.

5. Wischgummi gemäß einem der Ansprüche 1 bis 4, **dadurch gekennzeichnet, dass** das Alkoxysilan ausgewählt ist aus der Gruppe bestehend aus Tetramethoxysilan, Tetraethoxysilan, β-(3,4-Epoxycyclohexyl)-ethyltriethoxysilan, 3-Glycidyloxypropyltriethoxysilan und Methyltrimethoxysilan.

6. Wischgummi gemäß einem der Ansprüche 1 bis 5, **dadurch gekennzeichnet, dass** mindestens ein festes Gleitmittel enthalten ist.

7. Wischgummi gemäß Anspruch 6, **dadurch gekennzeichnet, dass** das feste Gleitmittel ausgewählt ist aus der Gruppe bestehend aus Molybdändisulfid, Graphit, Polytetrafluorethylen, Polyamid, Polyethylen, Mikroperlen aus Glas, kolloidales Kieselgel, Quarzmehl, Silikat und Titandioxid.

8. Wischgummi gemäß einem der Ansprüche 1 bis 7, **dadurch gekennzeichnet, dass** weiterhin mindestens ein funktionelle Gruppen aufweisendes Bindemittel enthalten ist.

9. Wischgummi gemäß Anspruch 8, **dadurch gekennzeichnet, dass** das funktionelle Gruppen aufweisende Bindemittel ausgewählt ist aus der Gruppe bestehend aus (Meth)acrylharz, Polyesterharz, Polyester-Polyurethanharz, Polyurethanhar, Polyamidharz, Polyamidimidharz, die jeweils Hydroxyl-, Amino-, Aminoalkyl-, Epoxy-, Carboxyl- und/oder Carboxyalkyl-Gruppen enthält.

10. Wischgummi gemäß einem der Ansprüche 1 bis 9, **dadurch gekennzeichnet, dass** eine wässrige Copolymerdispersion enthalten ist, basierend auf Acrylsäure- und Methacyrlsäureestern sowie Styrol.

11. Wischgummi gemäß einem der Ansprüche 1 bis 10, **dadurch gekennzeichnet, dass** weiterhin mindestens ein Additiv zur Verbesserung der hydrophoben Eigenschaften enthalten ist.

12. Wischgummi gemäß Anspruch 11, **dadurch gekennzeichnet, dass** das Additiv zur Verbesserung der hydrophoben Eigenschaften ausgewählt ist aus der Gruppe bestehend aus Polyethylendispersionen oder Wachsdispersionen.

13. Wischgummi gemäß Anspruch 12, **dadurch** gekennzeichet, dass das Wachs der Wachsdispersion ausgewählt ist aus der Gruppe bestehend aus Paraffinwachs, Carnaubawachs, mikrokristallines Wachs und Fischer-Tropsch-Wachs.

14. Wischgummi gemäß einem der vorhergehenden Ansprüche, **dadurch gekennzeichnet, dass** das Elastomermaterial ausgewählt ist aus der Gruppe bestehend aus Naturkautschuk, Chloropren-Kautschuk, Butadien-Kautschuk, Styrol-Butadien-Kautschuk, Ethylen-Propylen-Copolymere, Ethylen-Propylen-Dien-Terpolymere, Ethylen-Vinylacetat-Copolymere, chloriertes Polyethylen, chlorsulfoniertes Polyethylen, Acrylnitril-Butadien-Kautschuk, hydrierter Acrylnitril-Butadien-Kautschuk, Fluorkautschuk, Polyrethan-Elastomere, Mischungen aus Acrylnitril-Butadien-Kautschuk und Polyvinylchlorid sowie Mischungen dieser Materialien.

15. Verfahren zur Herstellung eines Wischgummis nach einem der vorhergehenden Ansprüche, **dadurch gekennzeichnet, dass** auf einen Profilkörper aus Elastomermaterial ein Beschichtungsmittel aufgetragen wird, wobei das Beschichtungsmittel mindestens ein Lösungsmittel und mindestens ein Bindemittel mit mindestens einer Harzkomponente enthält, und wobei die mindestens eine Harzkomponente ein Alkoxysilan oder ein Organosilan ist, und wobei die im Beschichtungsmittel enthaltenen Alkoxsysilane in Gegenwart von Wasser hydrolysiert werden und zu einer Binderphase kondensieren.

## Claims

1. Wiper rubber for wiper blades of windscreen wipers, which comprises a profile structure formed from an elastomer material and provided at least to some extent with a surface coating, **characterized in that** the surface coating has been formed from a coating composition comprising at least one solvent and at least one binder with at least one resin component, where the at least one resin component is an alkoxysilane or an organosilane.

2. Wiper rubber according to Claim 1, **characterized in that** the alkoxysilane has at least two functional groups.

3. Wiper rubber according to Claim 2, **characterized in that** the alkoxysilane has, alongside at least one alkoxy group, at least one other organic functional group.

4. Wiper rubber according to any of Claims 1 to 3, **characterized in that** the alkoxysilane is an alkoxysilane having at least one hydrolysable inorganic alkoxysilyl group and at least one organic functional group or an alkoxysilane having at least one hydrolysable alkoxysilyl group and at least one fluoroalkyl moiety.

5. Wiper rubber according to any of Claims 1 to 4, **characterized in that** the alkoxysilane has been selected from the group consisting of tetramethoxysilane, tetraethoxysilane, β-(3,4-epoxycyclohexyl)ethyltriethoxysilane, 3-glycidyloxypropyltriethoxysilane and methyltrimethoxysilane.

6. Wiper rubber according to any of Claims 1 to 5, **characterized in that** at least one solid lubricant is present.

7. Wiper rubber according to Claim 6, **characterized in that** the solid lubricant has been selected from the group consisting of molybdenum disulfide, graphite, polytetrafluoroethylene, polyamide, polyethylene, glass microbeads, colloidal silica gel, silicate, titanium dioxide and powdered quartz.

8. Wiper rubber according to any of Claims 1 to 7, **characterized in that** at least one binder having functional groups is moreover present.

9. Wiper rubber according to Claim 8, **characterized in that** the binder having functional groups has been selected from the group consisting of (meth)acrylic resin, polyester resin, polyester-polyurethane resin, polyurethane resin, polyamide resin, polyamideimide resin, in each case comprising hydroxy, amino, aminoalkyl, epoxy, carboxy and/or carboxyalkyl groups.

10. Wiper rubber according to any of Claims 1 to 9, **characterized in that** an aqueous copolymer dispersion is present, based on acrylic and methacrylic esters, and also styrene.

11. Wiper rubber according to any of Claims 1 to 10, **characterized in that** at least one additive is moreover present for improving hydrophobic properties.

12. Wiper rubber according to Claim 11, **characterized in that** the additive for improving hydrophobic properties has been selected from the group consisting of polyethylene dispersions or wax dispersions.

13. Wiper rubber according to Claim 12, **characterized in that** the wax of the wax dispersion has been selected from the group consisting of paraffin wax, carnauba wax, microcrystalline wax and Fischer-Tropsch wax.

14. Wiper rubber according to any of the preceding claims, **characterized in that** the elastomer material has been selected from the group consisting of natural rubber, chloroprene rubber, butadiene rubber, styrenebutadiene rubber, ethylene-propylene copolymers, ethylene-propylene-diene terpolymers, ethylene-vinyl acetate copolymers, chlorinated polyethylene, chlorosulfonated polyethylene, acrylonitrile-butadiene rubber, hydrogenated acrylonitrile-butadiene rubber, fluoro rubber, polyurethane elastomers, mixtures of acrylonitrile-butadiene rubber and polyvinyl chloride, and mixtures of these materials.

15. Process for producing a wiper rubber according to any of the preceding claims, **characterized in that** a coating composition is applied to a profile structure made of elastomer material, where the coating composition comprises at least one solvent and at least one binder with at least one resin component, and where the at least one resin component is an alkoxysilane or an organosilane, and where the alkoxysilanes present in the coating composition are hydrolysed in the presence of water and condensed to give a binder phase.

## Revendications

1. Caoutchouc racleur pour raclettes d'essuie-glace, qui comprend un corps profilé formé à partir d'un matériau élastomère, pourvu au moins partiellement d'un revêtement de surface, **caractérisé en ce que** le revêtement de surface est formé d'un agent de revêtement, contenant au moins un solvant et au moins un liant comprenant au moins un composant résineux, ledit au moins un composant résineux étant un alcoxysilane ou un organosilane.

2. Caoutchouc racleur selon la revendication 1, **caractérisé en ce que** l'alcoxysilane présente au moins deux groupes fonctionnels.

3. Caoutchouc racleur selon la revendication 2, **caractérisé en ce que** l'alcoxysilane présente, outre au moins un groupe alcoxy, au moins un autre groupe organique fonctionnel.

4. Caoutchouc racleur selon l'une quelconque des revendications 1 à 3, **caractérisé en ce que** l'alcoxysilane est un alcoxysilane présentant au moins un groupe alcoxysilyle inorganique hydrolysable et au moins un groupe organique fonctionnel ou un alcoxysilane présentant au moins un groupe alcoxysilyle hydrolysable et au moins un fluoroalkyle.

5. Caoutchouc racleur selon l'une quelconque des revendications 1 à 4, **caractérisé en ce que** l'alcoxysilane est choisi dans le groupe constitué par le tétraméthoxysilane, le tétraéthoxysilane, le β-(3,4-époxycyclohexyl)-éthyltriéthoxysilane, le 3-glycidyloxypropyltriéthoxysilane et le méthyltriméthoxysilane.

6. Caoutchouc racleur selon l'une quelconque des revendications 1 à 5, **caractérisé en ce qu'**il contient au moins un lubrifiant solide.

7. Caoutchouc racleur selon la revendication 6, **caractérisé en ce que** le lubrifiant solide est choisi dans le groupe constitué par le disulfure de molybdène, le graphite, le polytétrafluoroéthylène, le polyamide, le polyéthylène, les microbilles en verre, le gel silicique colloïdal, la farine de quartz, le silicate et le dioxyde de titane.

8. Caoutchouc racleur selon l'une quelconque des revendications 1 à 7, **caractérisé en ce qu'**il contient en outre au moins un liant présentant des groupes fonctionnels.

9. Caoutchouc racleur selon la revendication 8, **caractérisé en ce que** le liant présentant des groupes fonctionnels est choisi dans le groupe constitué par la résine (méth)acryle, la résine de polyester, la résine de polyester-polyuréthane, la résine de polyuréthane, la résine de polyamide, la résine de polyamide-imide, contenant à chaque fois des groupes hydroxyle, amino, aminoalkyle, époxy, carboxyle et/ou carboxyalkyle.

10. Caoutchouc racleur selon l'une quelconque des revendications 1 à 9, **caractérisé en ce qu'**il contient au moins une dispersion aqueuse de copolymère, à base d'esters de l'acide acrylique et méthacrylique ainsi que de styrène.

11. Caoutchouc racleur selon l'une quelconque des revendications 1 à 10, **caractérisé en ce qu'**il contient en outre au moins un additif destiné à améliorer les propriétés hydrophobes.

12. Caoutchouc racleur selon la revendication 11, **caractérisé en ce que** l'additif destiné à améliorer les propriétés hydrophobes est choisi dans le groupe constitué par les dispersions de polyéthylène ou les dispersions de cire.

13. Caoutchouc racleur selon la revendication 12, **caractérisé en ce que** la cire de la dispersion de cire est choisie dans le groupe constitué par la cire de paraffine, la cire de carnauba, la cire microcristalline et la cire de Fischer-Tropsch.

14. Caoutchouc racleur selon l'une quelconque des revendications précédentes, **caractérisé en ce que** la matériau élastomère est choisi dans le groupe constitué par le caoutchouc naturel, le caoutchouc de chloroprène, le caoutchouc de butadiène, le caoutchouc de styrène-butadiène, les copolymères d'éthylène-propylène, les terpolymères d'éthylène-propylène-diène, les copolymères d'éthylène-acétate de vinyle, le polyéthylène chloré, le polyéthylène chlorosulfoné, le caoutchouc d'acrylonitrile-butadiène, le caoutchouc d'acrylonitrile-butadiène hydrogéné, le caoutchouc fluoré, les élastomères de polyuréthane, les mélanges de caoutchouc d'acrylonitrile-butadiène et de poly(chlorure de vinyle) ainsi que les mélanges de ces matériaux.

15. Procédé pour la réalisation d'un caoutchouc racleur selon l'une quelconque des revendications précédentes, **caractérisé en ce qu'**un agent de revêtement est appliqué sur un corps profilé en matériau élastomère, l'agent de revêtement contenant au moins un solvant et au moins un liant comprenant au moins un composant résineux, ledit au moins un composant résineux étant un alcoxysilane ou un organosilane et les alcoxysilanes contenus dans l'agent de revêtement étant hydrolysés en présence d'eau et condensant en une phase de liant.
